# EUROPEAN PATENT APPLICATION

(11) **EP 4 470 793 A1**
(43) Date of publication of application: **04.12.2024**
(21) Application number: 24174777.3
(22) Date of filing: 08.05.2024
(51) Int. Cl.: B60C 9/00, C08K 3/08, C08K 3/22, C08K 5/47

(54) **COBALT-FREE STEEL CORD-RUBBER COMPOSITE**

(30) Priority: 17.05.2023 US 202318319129
(71) Applicant: The Goodyear Tire & Rubber Company, Akron, OH 44316 (US)
(72) Inventor: HECHT, Matthew David, Akron, 44316 (US); LIONETTI, Robert Edward, L-7227 Bereldange (LU); SANDSTROM, Paul Harry, Cuyahoga Falls, 44223 (US)
(74) Representative: Kutsch, Bernd

(57) **Abstract**

A steel cord-rubber composite (100) comprising a steel cord core (110), a steel cord coating layer (120) bonded or physically bonded to the steel cord core (110), and a rubber adhesion layer (130) bonded or physically bonded to the steel cord coating layer (120) is disclosed. The steel cord coating layer (120) comprises from 61 wt% to 66 wt% copper, from 3.4 wt% to 6.5 wt% iron and a balance of zinc; wherein the rubber adhesion layer (130) is formed from a rubber compound comprising 100 phr of at least one elastomer, sulfur, 20 phr to 100 phr of at least one filler, 2 phr to 15 phr of zinc oxide and 0.5 phr to 3.0 phr of at least one accelerator; and wherein neither the steel cord coating layer (120) nor the rubber compound comprises cobalt. Also, a process for preparing a steel cord-rubber composite is disclosed and an article comprising a main rubber portion and a steel cord-rubber composite reinforcement.

## Description

### Background

Steel cords are widely used to reinforce rubber products (e.g., tires). To promote adhesion, cobalt-containing materials are typically added to the rubber compound.

There are multiple drawbacks to the inclusion of cobalt. For example, increased industrial demand for cobalt for applications such as lithium-ion batteries and catalysts has driven up costs.

Additionally, the inclusion of cobalt may result in the oxidation of dienes and premature aging due to the catalytic properties of cobalt.

Moreover, cobalt may increase the rate of crack growth in rubber.

It would thus be desirable to develop new cobalt-free steel cord-rubber composites.

### Summary of the Invention

The invention relates to a steel cord-rubber composite in accordance with claim 1, to an article in accordance with claim 11 and to a process in accordance with claim 13.

Dependent claims refer to preferred embodiments of the invention.

Disclosed, in some embodiments, is a steel cord-rubber composite including a steel cord core; a steel cord coating layer bonded or physically bonded to the steel cord core; and a rubber adhesion layer bonded or physically bonded to the steel cord coating layer. The steel cord coating layer contains: from 61 wt% to 66 wt% copper; from 3.4 wt% to 6.5 wt% iron; and a balance of zinc. The rubber adhesion layer is formed from a rubber compound containing: 100 phr of at least one elastomer; sulfur; 20 phr to 100 phr of at least one filler; 2 phr to 15 phr of zinc oxide; and 0.5 phr to 3.0 phr of at least one accelerator. Neither the steel cord coating layer nor the rubber compound comprises cobalt.

The at least one elastomer preferably includes at least one diene elastomer.

In some preferred embodiments, the at least one elastomer includes: from 70 to 100 phr or from 70 to 95 phr of at least one polyisoprene rubber; and from 0 to 30 phr or from 5 to 30 phr of at least one additional rubber.

In some preferred embodiments, the at least one polyisoprene rubber comprises natural rubber and/or synthetic polyisoprene.

The at least one additional rubber preferably includes polybutadiene and/or styrene-butadiene rubber.

In some preferred embodiments, the at least one filler includes carbon black and/or silica.

The zinc oxide is preferably present in the rubber compound in an amount of from 8 phr to 10 phr.

In some preferred embodiments, the rubber compound does not contain any resin.

The at least one accelerator is preferably present in the rubber compound in a total amount of from 0.8 phr to 2.5 phr.

In some preferred embodiments, the at least one accelerator comprises a sulfenamide accelerator.

The sulfenamide accelerator preferably includes n-tert-butyl-benzothiazolesulfenamide (TBBS) and/or n-dicyclohexyl-2-benzothiazolesulfenamide (DCBS).

In some preferred embodiments, the n-tert-butyl-benzothiazolesulfenamide (TBBS) is present in the rubber compound in an amount of from 0.9 phr to 1.3 phr.

In some preferred embodiments, the n-dicyclohexyl-2-benzothiazolesulfenamide (DCBS) is present in the rubber compound in an amount of from 1.0 phr to 2.1 phr.

Disclosed, in other preferred embodiments, is a rubber article (e.g., a tire). The rubber article includes: a main rubber portion; and a steel cord-rubber composite reinforcement. The steel cord-rubber composite reinforcement includes a steel cord core; a steel cord coating layer physically bonded to the steel cord core; and a rubber adhesion layer physically bonded to the steel cord coating layer. The steel cord coating layer contains: from 61 wt% to 66 wt% copper; from 3.4 wt% to 6.5 wt% iron; and a balance of zinc. The rubber adhesion layer is formed from a rubber compound containing: 100 phr of at least one elastomer; sulfur; 20 phr to 100 phr of at least one filler; 2 phr to 15 phr of zinc oxide; and 0.5 phr to 3.0 phr of at least one accelerator. Neither the steel cord coating layer nor the rubber compound comprises cobalt.

In some preferred embodiments, the rubber article is selected from the group consisting of tires, hoses, belts, tracks, and air sleeves.

The tire may be a pneumatic tire or a non-pneumatic tire.

Disclosed, in further embodiments, is a method for producing a steel cord-rubber composite. The method includes applying a steel cord coating to a steel cord core to form a steel cord assembly; and applying a rubber compound to the steel cord assembly.

The steel cord coating layer contains: from 61 wt% to 66 wt% copper; from 3.4 wt% to 6.5 wt% iron; and a balance of zinc. The rubber adhesion layer is formed from a rubber compound containing: 100 phr of at least one elastomer; sulfur; 20 phr to 100 phr of at least one filler; 2 phr to 15 phr of zinc oxide; and 0.5 phr to 3.0 phr of at least one accelerator. Neither the steel cord coating layer nor the rubber compound comprises cobalt.

### Brief description of the drawings

The following is a brief description of the drawings, which are presented for the purposes of illustrating the exemplary embodiments disclosed herein.
FIG. 1 is a cross-sectional view of a steel cord-rubber composite article in accordance with some embodiments of the present disclosure.
FIG. 2 is a flow chart illustrating an example of a steel cord-rubber composite article formation process in accordance with some embodiments of the present disclosure.

### Detailed description of preferred embodiments of the invention

Unless otherwise defined, all technical and scientific terms used herein have the same meaning as commonly understood by one of ordinary skill in the art. In case of conflict, the present document, including definitions, will control. Preferred methods and materials are described below, although methods and materials similar or equivalent can be used in practice or testing of the present disclosure.

The singular forms "a," "an," and "the" include plural referents unless the context clearly dictates otherwise.

As used in the specification and in the claims, the term "comprising" may include the embodiments "consisting of" and "consisting essentially of." The terms "comprise(s)," "include(s)," "having," "has," "can," "contain(s)," and variants thereof, as used herein, are intended to be open-ended transitional phrases that require the presence of the named ingredients/steps and permit the presence of other ingredients/steps. However, such description should be construed as also describing compositions, mixtures, or processes as "consisting of" and "consisting essentially of" the enumerated ingredients/steps, which allows the presence of only the named ingredients/steps, along with any impurities that might result therefrom, and excludes other ingredients/steps.

All ranges disclosed herein are inclusive of the recited endpoint and independently combinable (for example, the range of "from 2 to 10" is inclusive of the endpoints, 2 and 10, and all the intermediate values).

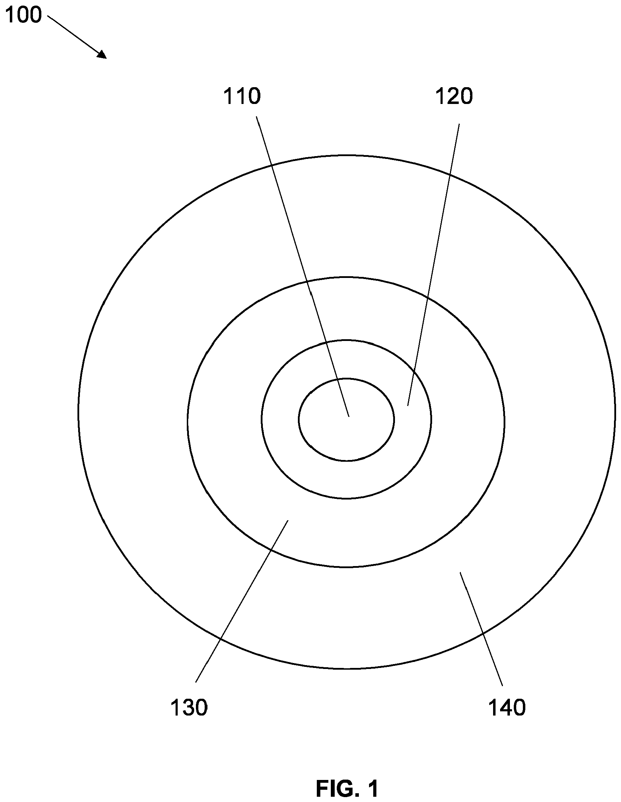

FIG. 1 illustrates an embodiment of a steel cord-rubber composite article 100 in accordance with some embodiments of the present disclosure. The article 100 includes a steel cord core 110, a steel cord coating 120, a rubber adhesion layer 130, and optionally one or more additional layers (e.g., rubber layers) 140. Although the depicted embodiment includes a monofilament core, it should be understood that multifilament cores are also contemplated. In multifilament embodiments each core may be coated.

### Steel Cord Core

The steel cord core 110 may have a circular, oval, square, or other polygonal shape in some embodiments.

In some embodiments, the steel cord core 110 is a monofilament core.

In other embodiments, the steel cord core 110 is a multifilament core. In multifilament steel cord core embodiments, the individual filaments may be braided or otherwise joined to enhance properties.

Preferred diameters of steel cord core diameters or other thicknesses for non-circular cross-sections include from 0.05 mm to 6 mm, from 0.10 mm to 1 mm, from 0.275 mm to 0.40 mm, and from 0.10 mm to 0.275 mm.

The steel cord core 110 may be a conventional tire core rod (e.g., of AISI grade 1070, 1080, 1090, or 1095).

The steel may include one or more microalloying elements such as chromium, boron, and/or nickel.

In some embodiments, the steel cord core 110 contains carbon steel.

The steel preferably contain from 0.12 wt% to 2.00 wt% carbon, up to 1 wt% manganese, up to 1.5 wt% silicon, up to 0.03 wt% sulfur, up to 0.03 wt% phosphorous, up to 1.0 wt% chromium, up to 2.0 wt% nickel, up to 0.50 wt% niobium, up to 0.0025 ppm boron, up to 1.0 wt% vanadium, up to 0.60 wt% molybdenum, up to 0.40 wt% copper, up to 0.50 wt% titanium, up to 0.08 wt% antimony, up to 0.05 wt% calcium, up to 0.20 wt% tungsten, up to 0.10 wt% zirconium, up to 0.035 wt% aluminum, up to 0.005 wt% nitrogen, and up to 0.050 wt% of rare earth metals. The balance of the steel is iron and, in some cases, unavoidable impurities.

In some preferred embodiments, the core steel contains from 0.95 wt% to 1.30 wt% carbon, from 0.20 wt% to 1.80 wt% chromium, form 0.20 wt% to 0.80 wt% manganese, form 0.20 wt% to 1.20 wt% silicon, less than or equal to 0.1 wt% niobium, and from 0.0006 ppm to 0.0025 ppm boron.

In other preferred embodiments, the core steel contains form 0.60 wt% to 1.20 wt% carbon including from 0.80 wt% to 1.1 wt% carbon, from 0.010 wt% to 1.0 wt% manganese including from 0.20 wt% to 0.80 wt% manganese, from 0.10 wt% to 1.50 wt% silicon including from 0.15 wt% to 0.70 wt% silicon, less than 0.03 wt% or less than 0.1 wt% sulfur, less than 0.03 wt% or less than 0.01 wt% phosphorous, and a balance of iron and, in some cases, unavoidable impurities.

### Steel Cord Core/Filament Coating

The steel cord coating 120 contains from 61 wt% to 66 wt% copper, from 3.4 wt% to 6.5 wt% iron, and a balance of zinc and unavoidable impurities. In some preferred embodiments, the total amount of unavoidable impurities is less than 1.0 wt%, less than 0.9 wt%, less than 0.8 wt%, less than 0.6 wt%, less than 0.5 wt%, less than 0.4 wt%, less than 0.3 wt%, less than 0.2 wt%, or less than 0.1 wt%. In particular embodiments, the steel cord coating 120 is completely devoid of cobalt.

The steel cord coating 120 preferably has a thickness in a range of from 0.01 µm to 0.50 µm, from 0.02 µm to 0.40 µm, from 0.03 µm to 0.35 µmm from 0.04 µm to 0.30 µm, from 0.05 µm to 0.25 µm, from 0.10 µm to 0.20 µm, and from 0.12 µm to 0.20 µm.

A single steel cord coating layer 120 may be applied to a single steel cord core 110 (e.g., a monofilament core or a multifilament core). However, in other embodiments, there are multiple steel cord core filaments, each with its own steel cord coating layer. In these embodiments, the coating composition associated with each filament may be the same or different. Individual coated core filaments may be braided or otherwise joined to enhance properties.

Filaments in the steel core may be completely covered by the coating or partly covered by the coating.

The term "strand" may be used to refer to components including one filament (e.g., steel cord core coated with the coating) or at least two filaments which may be twisted together or twisted around parallel filaments. The steel cord may consist of a single strand or a plurality of strands.

The constructions may be "layered" or "bunched." The layered construction has its filament layers at different lay lengths and/or different lay directions. The lay length and lay direction of the bunched construction are the same for each layer.

### Rubber Adhesion Laver

As used herein, the term "rubber adhesion layer" refers to rubber in physical contact with the outer circumference of steel cord core, and any rubber penetrating inside the steel cord construction. This rubber in physical contact with the steel cord coating layer 120 will be physically bonded to the steel cord coating layer 120.

The term "phr" as used herein, and according to conventional practice, refers to "parts of a respective material per 100 parts by weight of rubber." The terms "rubber" and "elastomer" can be used interchangeably, unless otherwise indicated. The terms "rubber composition," "compounded rubber," and "rubber compound" can be used interchangeably to refer to "rubber which has been blended or mixed with various ingredients and materials" and the terms "cure" and "vulcanize" may also be used interchangeably herein, unless otherwise indicated and such terms are well known to those having skill in the rubber mixing or rubber compounding art.

In some embodiments, the rubber compound does not contain cobalt (e.g., cobalt salts).

### Elastomer

The rubber compound of the rubber adhesion layer 130 contains 100 phr of elastomer(s).

In some preferred embodiments, the elastomer includes at least one diene elastomer.

In particular preferred embodiments, the elastomer includes from 70 to 100 phr of at least one polyisoprene rubber and from 0 to 30 phr of at least one additional rubber. The polyisoprene rubber may be selected from natural rubber and/or synthetic polyisoprene. The at least one additional rubber may be selected from polybutadiene and/or styrene-butadiene rubber.

In particular preferred embodiments, the elastomer is or contains block rubber graded as Technical Specified Rubber 10 (TSR 10) or Technical Specified Rubber 20 (TSR 20).

### Filler

The rubber compound of the rubber adhesion layer 130 may contain from 20 to 120 phr of one or more fillers. Examples for the total amount of filler(s) include from 30 phr to 100 phr, from 30 phr to 80 phr, from 40 phr to 80 phr, and from 50 phr to 80 phr.

In some embodiments, the filler is selected from carbon black, silica, and combinations thereof.

Representative examples of rubber reinforcing carbon blacks are referenced in The Vanderbilt Rubber Handbook, 13th edition, year 1990, on Pages 417 and 418 with their ASTM designations. This document is incorporated by reference herein. As indicated, such rubber reinforcing carbon blacks may have iodine absorptions (measure of particle size) ranging from, for example, 60 to 240 g/kg and DBP (dibutyl phthalate; measurement of structure) values ranging from 34 to 150 cc/100 g. One non-limiting example of a suitable carbon black is ASTM N326 which has an approximate DBP value of 72 and an approximate Iodine number of 82.

The reinforcing filler typically includes carbon black and optionally silica (e.g., synthetic precipitated silica).

The precipitated silica reinforcement may, for example, be characterized by having a BET surface area, as measured using nitrogen gas, in the range of, for example, 40 to 600, and more usually in a range of 50 to 300 square meters per gram. The BET method of measuring surface area might be described, for example, in the Journal of the American Chemical Society, Volume 60, as well as ASTM D3037.

Various commercially available precipitated silicas may be used, such as for example silicas from PPG Industries under the Hi-Sil trademark with designations 210, 243, and 315; silicas from Solvay with, for example, designations of Zeosil 1165MP^{™} and Zeosil 165GR^{™}; silicas from Evonik with, for example, designations VN2 and VN3; and chemically treated (pre-hydrophobated) precipitated silicas such as for example Agilon^{™} 400 from PPG.

A coupling agent may be included, particularly when the filler includes silica. However, in some embodiments, the rubber composition does not contain any coupling agent(s).

Commonly employed carbon blacks can be used as a conventional filler in an amount ranging from 10 to 150 phr. In another embodiment, from 20 to 80 phr of carbon black may be used. Representative examples of such carbon blacks include N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 cm3/100 g.

Other fillers may be used in the rubber composition including, but not limited to, particulate fillers including ultra-high molecular weight polyethylene (UHMWPE), crosslinked particulate polymer gels including but not limited to those disclosed in U.S. Pat. Nos. 6,242,534; 6,207,757; 6,133,364; 6,372,857; 5,395,891; or 6,127,488, and plasticized starch composite filler including but not limited to that disclosed in U.S. Pat. No. 5,672,639. Such other fillers may be used in an amount ranging from 1 to 30 phr.

The rubber composition may include from 10 to 150 phr of silica. In another embodiment, from 20 to 80 phr of silica may be used.

The commonly employed siliceous pigments which may be used in the rubber compound include conventional pyrogenic and precipitated siliceous pigments (silica). In one embodiment, precipitated silica is used. The conventional siliceous pigments employed may be precipitated silicas such as, for example, those obtained by the acidification of a soluble silicate, e.g., sodium silicate.

Such conventional silicas might be characterized, for example, by having a BET surface area, as measured using nitrogen gas. In one embodiment, the BET surface area may be in the range of 40 to 600 square meters per gram. In another embodiment, the BET surface area may be in a range of 80 to 300 square meters per gram. The BET method of measuring surface area is described in the Journal of the American Chemical Society, Volume 60, Page 304 (1930).

The conventional silica may also be characterized by having a dibutyl phthalate (DBP) absorption value in a range of 100 to 400, alternatively 150 to 300.

### Sulfur

The amount of the sulfur in the rubber compound will vary depending on the level of other additives that are used. Generally speaking, the amount of the sulfur will preferably range from 0.5 to 20 phr. In one embodiment, the amount will range from 1 to 10 phr.

Examples of suitable sulfur-vulcanizing agents include elemental sulfur (free sulfur) or sulfur donating vulcanizing agents, for example, an amine disulfide, polymeric polysulfide, alkyl phenol polysulfides or sulfur olefin adducts. As known to those skilled in the art, sulfur-vulcanizing agents are used in an amount ranging from 0.5 to 4 phr, or even, in some circumstances, up to 8 phr, with a range of from 1.5 to 2.5, sometimes from 2 to 2.5, being preferred. It is to be appreciated, however, that the cure system, including desired cure package ingredients as well as the following discussion concerning cure accelerators, may vary depending upon the rubber compound ingredients, including the chosen polymers and elastomers.

In one embodiment the rubber composition may contain a conventional sulfur containing organosilicon compound. In one embodiment, the sulfur containing organosilicon compounds are the 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide.

In another embodiment, suitable sulfur containing organosilicon compounds include compounds disclosed in U.S. Pat. No. 6,608,125. In one embodiment, the sulfur containing organosilicon compounds includes 3-(octanoylthio)-1-propyltriethoxysilane, CH3(CH2)6C(=O)-S-CH2CH2CH2Si(OCH2CH3)3, which is available commercially as NXT^{™} from Momentive Performance Materials.

In another embodiment, suitable sulfur containing organosilicon compounds include those disclosed in U.S. Patent Publication No. 2003/0130535. In one embodiment, the sulfur containing organosilicon compound is Si-363 from Degussa.

### Zinc oxide

Preferred amounts of zinc oxide comprise 2 to 15 phr or from 8 phr to 10 phr.

### Fatty acid

Preferred amounts of fatty acid(s) include from 0.5 to 3 phr. The fatty acid may be stearic acid.

### Resin

Preferred amounts of tackifier resins, if used, comprise 0.5 to 10 phr, usually 1 to 5 phr. However, in some embodiments, no resin is used.

### Accelerator

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4, alternatively 0.8 to 1.5, phr. In another embodiment, combinations of a primary and a secondary accelerator might be used with the secondary accelerator being used in smaller amounts, such as from 0.05 to 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound.

In particular embodiments, the accelerator is or includes n-tert-butyl-benzothiazolesulfenamide (TBBS) and/or n-dicyclohexyl-2-benzothiazolesulfenamide (DCBS).

### Processing oil

The rubber compound may also include up to 10 phr of processing oil. In some embodiments, the processing oil content is in a range of 0.01 to 3.5 phr. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, vegetable oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom. In some embodiments, no processing oil is utilized.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may be used in an amount ranging from 0.5 to 8 phr, alternatively with a range of from 1.5 to 6 phr. Typical amounts of processing aids comprise 1 to 50 phr. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants comprise 1 to 5 phr. Typical amounts of fatty acids, if used, which can include stearic acid comprise 0.5 to 3 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

The antiozonants may be physical protectants such as waxy materials that come to the surface and protect the part from oxygen or ozone or they may chemical protectors. The chemical protectors may be selected from the class of styrenated phenols, butylated octylated phenol, butylated di(dimethylbenzyl)phenol, p-phenylenediamines, butylated reaction products of p-cresol and Dicyclopentadiene (DCPD), polyphenolic anitioxidants, hydroquinone derivatives, quinoline, diphenylene antioxidants and thioester antioxidants and the like and their blends. Some representative trade names of suitable products include WINGSTAY^{®} S antioxidant, WINGSTAY^{®} T antioxidant, POLYSTAY^{®} C antioxidant, POLYSTAY^{®} 100 antioxidant, POLYSTAY^{®} 100 AZ antioxidant, POLYSTAY^{®} 200 antioxidant, WINGSTAY^{®} L antioxidant, WINGSTAY^{®} LHLS antioxidant, POLYSTAY^{®} K antioxidant, POLYSTAY^{®} 29 antioxidant, and WINGSTAY^{®} SN-1. The antioxidants and antiozonants used will preferably be non-staining and non-migratory.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The terms "non-productive" and "productive" mix stages are well known to those having skill in the rubber mixing art. The rubber composition may be subjected to a thermomechanical mixing step. The thermomechanical mixing step generally comprises a mechanical working in a mixer or extruder for a period of time suitable in order to produce a rubber temperature between 140° C and 190° C. The appropriate duration of the thermomechanical working varies as a function of the operating conditions, and the volume and nature of the components. For example, the thermomechanical working may be from 1 to 20 minutes.

### Optional Additional Laver(s)

Elements 110, 120, and 130 define a reinforcing component which may be provided as part of a broader article. Element 140 denotes possible other layers of that article. The other layer or layers may also contain rubber.

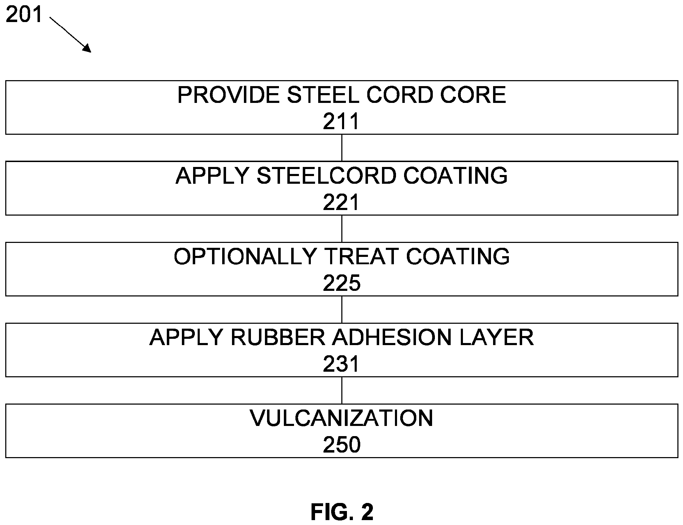

FIG. 2 illustrates an embodiment of a method 201 for producing a steel cord-rubber composite. The method 201 includes providing a steel cord core 211, applying a steel cord coating 221, optionally treating the coating 225, applying a rubber adhesion layer 231, and optionally vulcanizing 250.

The coating in step 221 may be applied via electroplating as described, for example, in US 2022/0112656 A1.

Treatment of the coating in step 225 may be performed in accordance with US 2022/0112656 A1.

Vulcanization of the article (e.g., pneumatic tire) may be generally carried out at conventional temperatures ranging from 100° C to 200° C. In one embodiment, the vulcanization 250 may be conducted at temperatures ranging from 110° C to 180° C. Any of the usual vulcanization processes may be used such as heating in a press or mold, heating with superheated steam or hot air. Such tires can be built, shaped, molded and cured by various methods which are known and will be readily apparent to those having skill in such art.

The rubber compound is in contact with or adjacent to the coating layer prior to curing and is preferably physically bound to the coating layer after curing. However, it is possible that some of the filaments may not be physically bonded to rubber for larger cords even after vulcanization.

As used herein, the term "physical bond" refers to any bond that prevents two surfaces from being separated, including chemical bonds, metallic bonds, mechanical interlock, etc.

Examples of articles in which the steel cord-rubber composite of the present application may be used include tires, hoses, belts, tracks, and air sleeves.

The belt may be a power transmission belt or a conveyor belt in some embodiments.

In particular embodiments, the steel cord-rubber composite is used to reinforce a pneumatic tire. The term "pneumatic tire" refers to a laminated mechanical device of generally toroidal shape (usually an open torus) having beads and a tread and made of rubber, chemicals, fabric and steel or other materials. In other embodiments, the tire is a non-pneumatic tire.

Both bias and radial-ply tires are contemplated. The term "radial-ply tire" refers to a belted or circumferentially restricted pneumatic tire in which the carcass ply cords, which extend from bead to bead, are laid at cord angles of between 65° and 90° with respect to the equatorial plane of the tire.

The composite may be used in a belt structure, bead, or carcass of a tire.

The term "belt structure" may refer to one or at least two layers of plies of parallel cords, underlying the tread, unanchored to the bead, and preferably having both left and right cord angles in the range of from 0 to 40°, including from 17° to 27°, with respect to the equatorial plane (EP) of the tire. Belt structures with one layer (i.e., zero-degree belts) are also contemplated.

The term "carcass" refers to the tire structure apart from the belt structure, the tread, and the undertread but including the beads. The carcass ply includes reinforcing cords embedded in an elastomeric substance and these components are considered to be a single entry.

The term "bead" refers to the part of the tire including an annular tensile member wrapped by the carcass ply and shaped, with or without other reinforcement elements such as flippers, chippers, apexes, toe guards, and chafers, to firm the design rim.

The following examples are provided to illustrate the devices and methods of the present disclosure.

### Examples

Experiments were performed using the steel cord coating layer of the present application. Wire adhesion significantly improved after aging the steel cord-rubber composite in water at 90 °C for 10 to 20 days compared to a standard copper-zinc alloy wire.

Lab testing in cobalt-containing and cobalt-free rubbers also demonstrated desired properties when the brass coating with iron was utilized.

Without wishing to be bound by theory, it is believed that the iron of the steel cord coating reduces ion transport between rubber and coating interphase during aging, thereby slowing dezincification.

Standard wire adhesion testing ("SWAT") was conducted. In SWAT, opposing pairs of wire are cured into a block of rubber, and maximum force required to pull the wires from the rubber is measured. This test is measuring essentially the same thing as the industry standard rubber/wire adhesion test described in ASTM D2229.

Wire samples were plated with brass containing different iron contents (0, 2.0, 3.4, 6.3, and 7.3 wt%). Adhesion testing was conducted using multiple rubber compounds and different curing and aging conditions.

Tables 1 and 2 summarize the compositions of example rubber compounds E1-E6 and comparative example rubber compounds CE3-CE6 where the amounts provided are phr and 100 phr elastomer was included. E1-E6 were cobalt-free whereas CE3-CE6 contained cobalt.

**Table 1:**

| Type | E1 | E2 | CE3 |
|---|---|---|---|
| Carbon Black | 60 | 62 | 57 |
| Silica | 0 | 0 | 20 |
| Sulfur | 6.25 | 6.75 | 5 |
| Cobalt Salt | 0 | 0 | 0.5 |
| ZnO | 10 | 10 | 8 |
| Resin (HMMM) | 0 | 0 | 4.2 |
| Resin (Resorcinol) | 0 | 0 | 4 |
| DCBS | 1.1 | 1.25 | 0.75 |

**Table 2:**

| Type | CE4 | E4 | CE5 | E5 | CE6 | E6 |
|---|---|---|---|---|---|---|
| Carbon Black | 0 | 0 | 60 | 60 | 45 | 50 |
| Carbon Black | 0 | 0 | 15 | 15 | 0 | 0 |
| Silica | 56 | 56 | 0 | 0 | 14 | 14 |
| Sulfur | 6.5 | 6.5 | 6.5 | 6.5 | 6.5 | 6.5 |
| Cobalt Salt | 0.5 | 0 | 0.5 | 0 | 0.75 | 0 |
| ZnO | 9 | 9 | 8 | 8 | 8 | 8 |
| DCBS | 2 | 2 | 0 | 0 | 0.75 | 1.05 |
| TBBS | 0 | 0 | 0.8 | 0.9 | 0 | 0 |

Optimal iron content was determined using a statistical T-test method. A statistical T-test is a standard statistical method to compare two populations or distributions and determine whether there is a statistically significant difference between the distribution means. Statistical T-tests were used to assign each iron content a letter based on the ranking of its mean SWAT force compared to other iron contents (A > B > C > D). Software identifies which iron contents should be grouped together, or are statistically distinguishable or not, based on their population means and standard deviations. Score is calculated by assigning one point to each 'A' grouping, 0 points for each 'AB' group, and -1 point for each group B or worse. 3.4 and 6.3 wt% Fe were overwhelmingly represented in group A and never in group C or D. The 20-day water aged condition was the best differentiator between standard brass and brass with iron for all cobalt-free compounds. Force and coverage in 20-day water aged condition sharply improved with iron content until above 2.0, or 3.4 wt% in some cases. After reaching these iron levels, adhesion reached a plateau. 5-day steam condition showed a similar, but less pronounced trend of adhesion with iron content. Results are summarized in Tables 3 and 4.

**Table 3: SWAT & Coverage as a function of iron content and compound used; all cure/aging conditions averaged together**

| Compound Groups | SWAT Force Grouping | | | | | Coverage Grouping | | | | |
|---|---|---|---|---|---|---|---|---|---|---|
| Iron Content | 0 | 2 | 3.4 | 6.3 | 7.3 | 0 | 2 | 3.4 | 6.3 | 7.3 |
| E1 | C | BC | A | AB | ABC | B | AB | A | A | AB |
| E2 | C | AB | A | A | BC | C | AB | A | A | BC |
| CE3 | BC | ABC | A | AB | C | A | A | A | A | A |
| | | | | | | | | | | |
| CE4 | C | BC | AB | A | AB | C | B | AB | A | A |
| E4 | C | B | AB | A | B | C | B | AB | A | AB |
| CE5 | B | A | A | A | A | D | C | A | AB | BC |
| E5 | C | B | AB | A | AB | C | B | AB | A | AB |
| CE6 | B | AB | AB | A | AB | B | A | A | A | A |
| E6 | B | A | A | A | B | B | A | A | A | A |
| Total A | 1 | 6 | 9 | 9 | 5 | 2 | 6 | 9 | 9 | 7 |
| Total B | 4 | 6 | 3 | 2 | 6 | 3 | 4 | 2 | 1 | 4 |
| Total C | 5 | 3 | 0 | 0 | 3 | 3 | 1 | 0 | 0 | 2 |
| Score | -7 | 0 | 6 | 7 | -2 | -4 | 1 | 7 | 8 | 3 |

**Table 4: SWAT & Coverage as a function of iron content and cure/aging condition; all cobalt-free compound data averaged together**

| Condition Groups | SWAT Force Grouping | | | | | Coverage Grouping | | | | |
|---|---|---|---|---|---|---|---|---|---|---|
| Iron Content | 0 | 2 | 3.4 | 6.3 | 7.3 | 0 | 2 | 3.4 | 6.3 | 7.3 |
| 23/310 | BC | AB | A | A | C | CD | BC | AB | A | D |
| 35/310 | BC | AB | A | A | C | D | BC | B | A | CD |
| 70/310 | C | AB | AB | A | B | C | AB | B | A | AB |
| 2 Day Green Humidity | AB | AB | A | A | B | B | AB | A | A | A |
| 2 Day Steam | B | AB | A | B | C | A | A | A | A | A |
| 4 Day Salt | C | AB | A | A | B | B | A | A | AB | AB |
| 5 Day Steam | C | B | AB | A | AB | B | A | A | A | A |
| 6 Day Humidity | C | B | AB | AB | A | C | B | A | A | A |
| 10 Day Water | C | A | A | B | A | B | A | A | A | A |
| 20 Day Water | C | B | A | A | A | C | B | A | AB | A |
| Total A | 1 | 7 | 10 | 8 | 4 | 1 | 6 | 8 | 10 | 8 |
| Total B | 4 | 9 | 3 | 3 | 4 | 4 | 6 | 3 | 2 | 2 |
| Total C | 8 | 0 | 0 | 0 | 3 | 4 | 2 | 0 | 0 | 1 |
| Total D | 0 | 0 | 0 | 0 | 0 | 2 | 0 | 0 | 0 | 2 |
| Score | -9 | -2 | 7 | 5 | -3 | -9 | -2 | 5 | 8 | 3 |

## Claims

1. A steel cord-rubber composite (100) comprising a steel cord core (110), a steel cord coating layer (120) bonded or physically bonded to the steel cord core (110), and a rubber adhesion layer (130) bonded or physically bonded to the steel cord coating layer (120); wherein the steel cord coating layer (120) comprises from 61 wt% to 66 wt% copper, from 3.4 wt% to 6.5 wt% iron and a balance of zinc; wherein the rubber adhesion layer is formed from a rubber compound comprising 100 phr of at least one elastomer, sulfur, 20 phr to 100 phr of at least one filler, 2 phr to 15 phr of zinc oxide and 0.5 phr to 3.0 phr of at least one accelerator; and wherein neither the steel cord coating layer nor the rubber compound comprises cobalt.

2. The steel cord-rubber composite of claim 1, wherein the at least one elastomer comprises at least one diene elastomer; or wherein the at least one elastomer comprises from 70 to 100 phr of at least one polyisoprene rubber and from 0 to 30 phr of at least one additional rubber.

3. The steel cord-rubber composite of claim 2, wherein the at least one polyisoprene rubber comprises natural rubber and/or synthetic polyisoprene; and/or wherein the at least one additional rubber comprises polybutadiene and/or styrene-butadiene rubber.

4. The steel cord-rubber composite of at least one of the previous claims, wherein (i) the at least one filler comprises carbon black and/or silica; or wherein (ii) the at least one filler consists of carbon black; or wherein (ii) the at least one filler consists of silica.

5. The steel cord-rubber composite of at least one of the previous claims, wherein the rubber compound further comprises from 0.5 to 3 phr of at least one fatty acid.

6. The steel cord-rubber composite of at least one of the previous claims, wherein the zinc oxide is present in the rubber compound in an amount of from 8 phr to 10 phr.

7. The steel cord-rubber composite of at least one of the previous claims, wherein the rubber compound is free of any resin.

8. The steel cord-rubber composite of at least one of the previous claims, wherein the at least one accelerator is present in the rubber compound in a total amount of from 0.8 phr to 2.5 phr.

9. The steel cord-rubber composite of at least one of the previous claims, wherein the at least one accelerator comprises a sulfenamide accelerator, the sulfenamide accelerator preferably comprising n-tert-butyl-benzothiazolesulfenamide (TBBS) and/or n-dicyclohexyl-2-benzothiazolesulfenamide (DCBS).

10. The steel cord-rubber composite of claim 9, wherein the n-tert-butyl-benzothiazolesulfenamide (TBBS) is present in the rubber compound in an amount of from 0.9 phr to 1.3 phr and/or wherein the n-dicyclohexyl-2-benzothiazolesulfenamide (DCBS) is present in the rubber compound in an amount of from 1.0 phr to 2.1 phr.

11. An article comprising a main rubber portion and a steel cord-rubber composite reinforcement, the steel cord-rubber composite reinforcement being the steel cord-rubber composite (100) in accordance with at least one of the previous claims.

12. The article of claim 11, wherein the article is a rubber article selected from the group consisting of tires, pneumatic tires, non-pneumatic tires, hoses, belts, tracks, and air sleeves.

13. A process for preparing a steel cord-rubber composite in accordance with at least one of the claims 1 to 10, the process comprising applying the steel cord coating (120) to the steel cord core (110) to form a steel cord assembly, and applying a rubber compound to the steel cord assembly.
